Europäisches Patentamt

European Patent Office

Office européen des brevets

(11) Publication number: **0 337 662**
**A2**

# (12) EUROPEAN PATENT APPLICATION

(21) Application number: **89303407.4**

(22) Date of filing: **06.04.89**

(51) Int. Cl.⁴: **C08L 23/12 , //(C08L23/12, 23:20)**

(30) Priority: **14.04.88 GB 8808814**

(43) Date of publication of application:
**18.10.89 Bulletin 89/42**

(84) Designated Contracting States:
**AT BE CH DE ES FR GB GR IT LI LU NL SE**

(71) Applicant: **DON & LOW LIMITED**
**St. James Road Forfar**
**Angus DD8 2AL Scotland(GB)**

(72) Inventor: **Ferrar, Andrew Nicholas,**
**Little Court, 69, Dundee Road,**
**West Ferry, Dundee DD5 1NA,(GB)**
Inventor: **Simpson, George,**
**10, Inchgarth Street,**
**Forfar,(GB)**

(74) Representative: **Horner, Martin Grenville et al**
**Cruikshank & Fairweather 19 Royal**
**Exchange Square**
**Glasgow G1 3AE Scotland(GB)**

(54) **Polymers.**

(57) A polymer blend comprising a principal amount of polypropylene includes a minor amount of polybutylene to enhance the tenacity of the oriented polymer. Usually draw ratios of 8:1 to 14:1 are used.

EP 0 337 662 A2

## POLYMERS

The present invention relates to polymers and in particular to novel polyolefin blends with improved physical characteristics.

Oriented polypropylene finds wide application in fibres, films and tapes. Monofilament and multifilament yarns are used in upholstery, ropes and technical applications. Biaxially oriented films are used in the packaging of food and general goods. Tapes are extensively woven into cloth which forms the basis of primary and secondary backings in the manufacture of tufted carpets as well as packaging in the form of sacks and flexible intermediate bulk containers.

Strength is an important property in many of the above applications. The strength of existing polypropylene and polypropylene blend materials is however limited.

It is an object of the present invention to avoid or minimise any such disadvantage.

The present invention provides a new polymer blend consisting essentially of a principal polymer component comprising polypropylene and a minor polybutylene component in a proportion sufficient to increase the strength of said polymer.

The polymers of the present invention have significantly improved strength as measured by their tenacity, that is the maximum stress they can resist without rupture, with increases of up to 20% or more for particular blends of polypropylene and polybutylene.

Various proportions of polybutylene with respect to the principal component may be used in accordance with the present invention; though in general it has been found that if the polybutylene proportion is increased beyond 10% there is little if any increase in strength. Preferably there is used from 0.1 to 10% by weight of polybutylene, desirably from 1 to 5%, most preferably from 2 to 4% by weight of polybutylene in the polymer blend.

It should also be noted that whilst significant increases in strength can be obtained over a wide range of draw ratios, it is generally desirable that there should be used draw ratios in the range corresponding to that at which the unmodified polymer has maximum strength. Thus preferably the polymers of the present invention have a draw ratio of from 8:1 to 14:1.

It may also be noted that the invention includes within its scope polymers wherein the principal component includes minor amounts of other polyolefins such as are used in conventional polypropylene polymers for improving processing thereof and/or their physical characteristics. Thus, for example, the invention includes polymers containing from 0.1 to 30% by weight of polyethylene for improving the drawing behaviour of the polymer.

Further preferred features and advantages of the present invention will appear from the following detailed examples for some preferred embodiments given by way of illustration only.

## EXAMPLES

Polypropylene tapes were produced from a Shell polymer HE6104 (MFI 1.5) (obtainable from Shell Chemicals (U.K.) Limited of Chester, England) by extruding the melt into a water quench, reheating, stretching and cooling before winding up a 4mm wide tape of 220 tex. Polybutylene was a polybutene - 1 Shell product PB200 (MFI 1.8) (also obtainable from Shell Chemicals (U.K.) Ltd. Granules of polypropylene and polybutylene were physically blended to give an intimate mix before extrusion. Results in Table 1 illustrate the improvement from the polybutylene addition which is clearly presented in Figure 1.

Table 1

| VARIATION OF TAPE PROPERTIES WITH DRAW RATIO AND COMPOSITION | | | | | | | | |
|---|---|---|---|---|---|---|---|---|
| Draw Ratio | PP Tape Composition | | | | | | | |
| | No PB | | 1% PB | | 3%PB | | 5% PB | |
| | Ten[1] | Elong[2] | Ten[1] | Elong[2] | Ten[1] | Elong[2] | Ten[1] | Elong[2] |
| 8.1 | 490 | 26.0 | 522 | 23.0 | 508 | 28.6 | 547 | 25.0 |
| 9.6:1 | 518 | 20.5 | 564 | 17.6 | 595 | 19.3 | 575 | 19.2 |
| 10:1 | 523 | 19.4 | 561 | 16.5 | 598 | 17.9 | 574 | 17.8 |
| 12:1 | 510 | 16.3 | 520 | 13.2 | 564 | 14.8 | 547 | 14.4 |
| 14:1 | - | - | - | - | 557 | 13.8 | 534 | 13.3 |
| PP = Polypropylene <br> PB = Polybutylene | | | | | | | | |

1 Tenacity in mN/tex
2 Elongation in %

## Claims

1. A polymer blend which consists essentially of a principal polymer component comprising polypropylene and a minor polybutylene component in a proportion sufficient to increase the strength of the polymer.

2. A blend according to claim 1 which comprises 0.1 to 10% by weight of polybutylene.

3. A blend according to claim 2 which comprises 2 to 4% by weight of polybutylene.

4. A blend according to any preceding claim which has been oriented by drawing in a draw ratio of from 8:1 to 14:1.

5. A blend according to claim 4 in the form of a biaxially oriented film or tape.

6. A blend according to claim 4 in the form of a monoaxially oriented fibre or filament.

7. A blend according to any preceding claim which further comprises 0.1 to 30% by weight of polyethylene.